# EUROPÄISCHE PATENTANMELDUNG

(11) **EP 1 492 212 A2**
(43) Veröffentlichungstag der Anmeldung: **29.12.2004**
(21) Anmeldenummer: 04013685.5
(22) Anmeldetag: 09.06.2004
(51) Int. Cl.: H02K 1/02

(54) **Weichmagnetische Legierung, Schrittmotor für eine elektrische Uhr mit einem Stator aus dieser weichmagnetischen Legierung sowie Quarzuhr**

(30) Priorität: 17.06.2003 DE 10327522
(71) Anmelder: Vacuumschmelze GmbH & Co. KG, 63450 Hanau (DE)
(72) Erfinder: Tenbrink, Johannes, 63776 Mömbris (DE)
(74) Vertreter: Schäfer, Horst, Dr.

(57) **Zusammenfassung**

Es wird eine weichmagnetische Legierung für Schrittmotoren für elektrische Uhren, insbesondere für analoge Quarzuhren vorgestellt, die im wesentlichen aus 60 < Ni < 80 Gew.%, 0,05 ≤ Mn ≤ 1,0 Gew.%, 8,5 ≤ Cr + 0,85 Mo ≤ 15,0 Gew.%,
0 ≤ Si ≤ 0,5 Gew.%, 0 ≤ Co ≤ 5,0 Gew.%, 0 ≤ B ≤ 0,3 Gew.%, Rest Fe sowie erschmelzungsbedingten und/oder zufälligen Verunreinigungen besteht. Diese weichmagnetischen Legierungen weisen eine Induktion von 0,30 ≤ B₁₀ ≤ 0,60 Tesla bei Raumtemperatur und einem angelegten Magnetfeld H = 10 A/cm auf. Durch die niedrigeren Sättigungsinduktionen lassen sich bei Schrittmotoren mit einteiligem Stator Statorgeometrien verwirklichen, die im Vergleich zum Stand der Technik breitere Statorstege aufweisen können.

## Beschreibung

Die Erfindung betrifft eine weichmagnetische Legierung und einen Schrittmotor für eine elektrische Uhr, insbesondere für eine analoge Quarzuhr mit einem Rotor aus einem dauermagnetischen Material, einem Stator aus der weichmagnetischen Legierung mit einer Sättigungsinduktion B_{S}, welche den Rotor umgibt, und einer Spule mit einem Spulenkern aus einem weichmagnetischen Material mit einer Sättigungsinduktion B_{S}' ≥ B_{S}, zur impulsförmigen Magnetisierung des Stators.

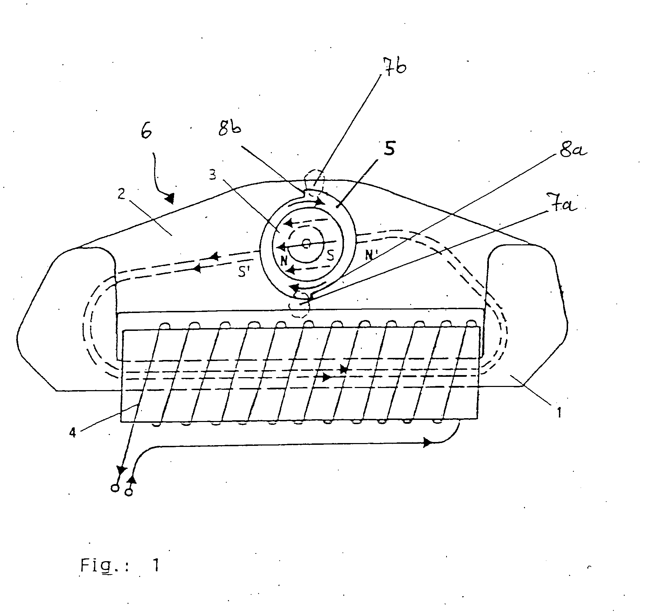

Ein solcher Schrittmotor für elektrische Uhren, insbesondere analoge Quarzuhren, ist beispielsweise aus der DE-OS 28 47 921 bekannt. Der dort beschriebene Schrittmotor ist in der Figur 1 dargestellt.

Der Schrittmotor 6 beinhaltet einen Spulenkern 1 aus weichmagnetischem Material, der mit einem Stator 2 aus einer weichmagnetischen Legierung verbunden ist, wobei in eine Öffnung 5 des Stators 2 ein Rotor 3 aus dauermagnetischem Material eingesetzt ist. Der Spulenkern 1 ist mit einer Wicklung 4 versehen.

Der Stator 2 ist einstückig ausgeführt. Bei dem gezeigten Schrittmotor 6 wird die Drehrichtung des Rotors 3 durch zwei Aussparungen 8a, 8b bestimmt, die in der Öffnung 5 des Stators 4 ausgebildet sind. Der gezeigte einstückige Stator 4 ist ferner mit Stegen 7a und 7b versehen.

Durch eine in der Figur nicht gezeigte quartzgeregelte elektronische Ansteuerung wird eine elektrische Spannung in Form von Rechteckspannungsimpulsen auf die Wicklung 4 des Spulenkerns 1 gegeben.

Dadurch ergibt sich an den Stegen 7a und 7b eine magnetische Sättigung, so dass ein den Rotor 3 durchsetzender magnetischer Streufluss entsteht, der den Rotor 3 "schrittweise", den Rechteckspannungsimpulsdauern entsprechend, dreht.

Der weichmagnetische Werkstoff des Spulenkerns 1 weist dabei eine höhere Sättigungsinduktion B_{S} als die weichmagnetische Legierung des Stators 2 auf, wodurch man eine Überdimensionierung des Spulenkerns 1 und die damit einhergehende Wirkungsgraderniedrigung des Schrittmotors vermeiden kann.

Für die Statoren und Spulenkerne wurden bisher eine Vielzahl von weichmagnetischen Werkstoffen, insbesondere Legierungen entwickelt.

So ist es beispielsweise aus der EP 0 640 895 B1 bekannt, den Stator 4 aus einer Nickel-Eisen-Legierung mit 34 bis 40 Gew.% Nickel und die Sättigungsinduktion vermindernden Zusätzen im Bereich von 0,5 bis 8 Gew.% eines oder mehrerer der Elemente Molybdän, Niob, Zirkon, Mangan, Vanadium, Chrom und/oder 0,5 bis 5 Gew.% eines oder mehrere der Elemente Silizium, Aluminium, Titan auszubilden. Der Spulenkern wird hingegen aus einer binären Nickel-Eisen-Legierung mit einem Nickelgehalt über 42 Gew.% und einer Sättigungsinduktion von mehr als 1,3 Tesla ohne die genannten Zusätze ausgebildet. Die dort beschriebene Legierungsauswahl weist Sättigungsinduktionswerte B_{S} zwischen 0,6 und 1,0 Tesla bei Raumtemperatur auf.

Um die Temperaturstabilität der B-H-Schleifen im Bereich von -20 C bis +80 C und die Oxidationsbeständigkeit von weichmagnetischen Legierungen weiter zu verbessern, wurde in der US 5,838,080 vorgeschlagen, eine weichmagnetische Legierung für den Stator zu verwenden, die aus 40 ≤ Ni + Co ≤ 60 Gew.%, 0 ≤ Co ≤ 7 Gew.%, 8 ≤ Cr ≤ 13,5 Gew.% sowie 8 ≤ (Cr + Mn + Si + 0,85 Mo + Nb + V + W) ≤ 13,5 Gew.% sowie Rest Fe besteht. Diese Legierungen weisen typischerweise Curietemperaturen T_{C} ≥ 200°C auf und Sättigungsinduktionswerte B_{S} zwischen 0,6 und 0,8 Tesla bei Raumtemperatur.

Beide oben genannten Legierungsauswahlen weisen eine relativ hohe Sättigungsinduktion B_{S} auf. Bei einem angelegten Magnetfeld von H = 10 A/cm befindet man sich mit beiden Legierungsauswahlen praktisch in der Sättigung und in Induktionswertbereichen B₁₀ oberhalb 0,70 Tesla.

Damit der für die Drehung des Rotors 3 notwendige Magnetfluss maximal in die Luft austreten kann, ist eine sehr schmale Breite der Stege 7a und 7b im Bereich der Statoröffnung notwendig. Solche sehr schmalen Stege sind jedoch nur aufwendig herzustellen, insbesondere gestaltet sich das Stanzen dieser sehr schmalen Stege als schwierig.

Würde man eine weichmagnetische Legierung mit einer deutlich niedrigeren Sättigungsinduktion B_{S} verwenden, so hätte dies zur Folge, dass man die Stege breiter ausführen könnte.

Würde man die Breiten der Stege so schmal belassen wie im Stand der Technik, so könnte mit einer weichmagnetischen Legierung, die eine gegenüber den Legierungen aus dem Stand der Technik niedrigere Sättigungsinduktion B_{S} aufweisen würde, mehr magnetischer Streufluss in die Umgebung austreten. Die magnetische Erregung des Schrittschaltmotors könnte damit wesentlich effektiver genutzt werden.

Aus diesen beiden Problemstellungen heraus ist zu erkennen, dass seit längerer Zeit ein Wunsch besteht, eine weichmagnetische Legierung zu haben, die im Vergleich zu den bisher eingesetzten weichmagnetischen Legierungen für Schrittschaltmotoren für elektrische Uhren, insbesondere für analoge Quarzuhren, eine gegenüber den aus dem Stand der Technik bekannten Legierungen deutlich niedrigere Sättigungsinduktion B_{S} aufweist.

Die Legierungen müssen jedoch im Vergleich zu den aus dem Stand der Technik bekannten weichmagnetischen Legierungen mit den relativ hohen Sättigungsinduktionswerten B_{S} auch eine zumindest ebenbürtige Temperaturstabilität bzgl. der Sättigungsinduktionen im Bereich von -20°C bis +80°C aufweisen und eine vergleichbare Korrosionsbeständigkeit.

Aufgabe der vorliegenden Erfindung ist es daher, eine neue weichmagnetische Legierungsauswahl bereitzustellen,
1. die eine Sättigungsinduktion B_{S} < 0,6 Tesla aufweist,
2. die gleichzeitig im Bereich von -20°C und +80°C bezüglich der Sättigungsinduktion B_{S} temperaturstabil ist und
3. die gleichzeitig eine ausreichende Korrosionsbeständigkeit besitzt.

Erfindungsgemäß wird diese Aufgabe durch eine weichmagnetische Legierungsauswahl gelöst, die im wesentlichen aus 60 < Ni < 80 Gew.%, 0,05 ≤ Mn ≤ 1,0 Gew.%, 8,5 ≤ (Cr + 0,85 Mo) ≤ 15 Gew.%, 0 ≤ Si ≤ 0,5 Gew.%, 0 ≤ Co ≤ 5,0 Gew.%, 0 ≤ B ≤ 0,3 Gew.%, Rest Fe sowie erschmelzungsbedingten und/oder zufälligen Verunreinigungen besteht, welche bei einem angelegten Magnetfeld von H = 10 A/cm eine Induktion 0,30 ≤ B₁₀ < 0,60 Tesla bei Raumtemperatur aufweist.

Unter dem Begriff "besteht im Wesentlichen aus" wird hier und im Folgenden verstanden, dass die erfindungsgemäße Legierungsauswahl neben den angegebenen Hauptbestandteilen an Ni, Fe, Mn, Cr, Mo, Si und Co lediglich erschmelzungsbedingte und/oder zufällige Verunreinigungen in einer solchen Menge aufweisen kann, die weder die mechanischen noch die magnetischen Eigenschaften signifikant beeinträchtigt. Des Weiteren wird hier und im Folgenden unter dem Begriff "besteht im Wesentlichen aus" auch die teilweise Ersetzung der Bestandteile Cr und Mo durch die homologen oder in etwa gleich wirkenden Elemente W, V, Nb und/oder Ta verstanden, sofern weder die mechanischen noch die magnetischen Eigenschaften der erfindungsgemässen Legierungsauswahl signifikant beeinträchtigt werden.

Bevorzugt ist eine Legierungsauswahl, die im wesentlichen aus 60 < Ni ≤ 70 Gew.%, 0,05 ≤ Mn ≤ 1,0 Gew.%, 8,5 ≤ (Cr + 0,85 Mo) ≤ 15 Gew.%, sowie 0 ≤ Si ≤ 0,5 Gew.%, 0 ≤ Co ≤ 5,0 Gew.%, 0 ≤ B ≤ 0,3 Gew.%, Rest Fe sowie erschmelzungsbedingten und/oder zufälligen Verunreinigungen besteht, welche bei einem angelegten Magnetfeld von H = 10 A/cm eine Induktion 0,30 ≤ B₁₀ ≤ 0,60 Tesla bei Raumtemperatur aufweist.

Besonders bevorzugt ist eine Legierungsauswahl, die im wesentlichen aus 60 < Ni ≤ 70 Gew.%, 0,05 ≤ Mn ≤ 1,0 Gew.%, 10,0 ≤ (Cr + 0,85 Mo) ≤ 14,0 Gew.%, 0 ≤ Si ≤ 0,5 Gew.%, 0 ≤ Co ≤ 5,0 Gew.%, 0 ≤ B ≤ 0,3 Gew.%, Rest Fe sowie erschmelzungsbedingten und/oder zufälligen Verunreinigungen besteht, welche bei einem angelegten Magnetfeld von H = 10 A/cm eine Induktion 0,35 ≤ B₁₀ ≤ 0,55 Tesla bei Raumtemperatur aufweist.

Weiter verbessert ist eine Legierungsauswahl, die im wesentlichen aus 60 < Ni ≤ 70 Gew.%, 0,05 ≤ Mn ≤ 1,0 Gew.%, 10,5 ≤ (Cr + 0,85 Mo) ≤ 13,5 Gew.%, 0 ≤ Si ≤ 0,5 Gew.%, 0 ≤ Co ≤ 5,0 Gew.%, 0 ≤ B ≤ 0,3 Gew.%, Rest Fe sowie erschmelzungsbedingten und/oder zufälligen Verunreinigungen besteht, welche bei einem angelegten Magnetfeld von H = 10 A/cm eine Induktion 0,40 ≤ B₁₀ ≤ 0,55 Tesla bei Raumtemperatur aufweist.

Ideal ist eine Legierungsauswahl, die im wesentlichen aus 63 ≤ Ni ≤ 67 Gew.%, 0,05 ≤ Mn ≤ 1,0 Gew.%, 11,0 ≤ (Cr + 0,85 Mo ≤ 13,0) Gew.%, 0 ≤ Si ≤ 0,5 Gew.%, 0 ≤ Co ≤ 5,0 Gew.%, 0 ≤ B ≤ 0,3 Gew.%, Rest Fe sowie erschmelzungsbedingten und/oder zufälligen Verunreinigungen besteht, welche bei einem angelegten Magnetfeld von H = 10 A/cm eine Induktion 0,40 ≤ B₁₀ ≤ 0,52 Tesla bei Raumtemperatur aufweist.

Zur Erzielung besonders guter weichmagnetischer Eigenschaften sind die Gehalte an erschmelzungsbedingten und/oder zufälligen metallischen Verunreinigungen bei allen Legierungsauswahlen auf Werte von Ti ≤ 0,01 und Al ≤ 0,01 Gew.% beschränkt.

Zur Verbessserung der Stanzbarkeit und zur Erhöhung der Festigkeit im schlussgeglühten Zustand können die erfindungsgemäßen weichmagnetischen Legierungen einen Gehalt an Bor von 0,005 ≤ B ≤ 0,03 Gew.% aufweisen.

Typischerweise weisen die erfindungsgemäßen weichmagnetischen Legierungen einen Gehalt an erschmelzungsbedingten und/oder zufälligen nichtmetallischen Verunreinigungen S ≤ 0,005 Gew.%, N ≤ 0,005 Gew.%, O ≤ 0,01 Gew.% und C ≤ 0,05 Gew.% auf.

Zur Erzielung besonders guter weichmagnetischer Eigenschaften sind die Gehalte an erschmelzungsbedingten und/oder zufälligen nichtmetallischen Verunreinigungen auf S ≤ 0,003 Gew.%, N ≤ 0,002 Gew.%, O ≤ 0,006 Gew.% und C ≤ 0,02 Gew.% beschränkt.

Mit den erfindungsgemäßen weichmagnetischen Legierungen lassen sich hervorragende Schrittmotoren herstellen, die mit einem Rotor aus einem dauermagnetischen Material, einem Stator aus einer weichmagnetischen Legierung mit einer Sättigungsinduktion B_{S}, welche den Rotor umgibt und einer Spule mit einem Spulenkern aus einem weichmagnetischen Material, vorzugsweise mit einer Sättigungsinduktion B_{S}' > B_{S} ,zur impulsförmigen Magnetisierung des Stators herstellen. Die Statoren bestehen dabei aus den erfindungsgemäßen weichmagnetischen Legierungen. Es sind nicht nur Schrittmotoren für elektrische Uhren denkbar, sondern auch für andere Anwendungen.

In der Regel sind die Statoren einstückig ausgeführt, wobei an den Statoren angrenzend an der die den Rotor aufnehmenden Öffnung gegenüberliegende schmale Stege ausgebildet sind. Des Weiteren befinden sich in typischerweise entlang dem Außenumfang der Öffnung in dem Stator zwei gegenüberliegende Ausnehmungen. Die erfindungsgemässen Schrittmotoren sind von ihrer Funktionsweise im Übrigen identisch zu dem eingangs beschriebenen Schrittmotor aus dem Stand der Technik.

Bei den erfindungsgemäßen Schrittmotoren werden typischerweise dann die Spule und der Spulenkern entweder aus einer Ni48Fe-Legierung oder aus einer Ni44,5Fe-Legierung hergestellt.

Die Erfindung wird im Folgenden anhand von Ausführungsbeispielen eingehend beschrieben. Die beigefügte Tabelle listet dabei die Zusammensetzung der einzelnen Legierungsbeispiele sowie deren physikalische Eigenschaften auf.

Alle Legierungsbeispiele wurden durch Herstellen einer Legierungsschmelze unter Vakuum hergestellt. Pfannenmetallurgische Verfahren sind jedoch auch möglich.

Die einzelnen Legierungsschmelzen wurden anschließend zu einem Gussblock abgegossen. Die Gussblöcke wurden zu Brammen warmverformt. Danach wurden die Brammen zu einem Warmband mit einer Dicke von 5 mm warmverformt.

Anschliessend wurden die Warmbänder jeweils zu einem Band kaltverformt. Die kaltverformten Bander wiesen Dicken von 0,5 mm auf. Aus den kaltverformten Bändern wurden Proben ausgestanzt und einer magnetischen Schlussglühung oberhalb 1000°C unterworfen.

| Charge | Ni | Cr | Mo | Co | Mn | Si | C | B₁₀ (T) | H_{c} (mA/cm) |
|---|---|---|---|---|---|---|---|---|---|
| 93/6535 | 65,06 | 10,07 | - | - | 0,52 | 0,21 | 0,023 | 0,584 (20°C) | 31 |
| 93/6536 | 65,10 | 11,07 | - | - | 0,49 | 0,21 | 0,021 | 0,508 (20°C) | 27 |
| 93/6537 | 65,19 | 11,59 | - | - | 0,48 | 0,21 | 0,020 | 0,469 (20°C) | 22 |
| 93/6538 | 64,91 | 12,26 | - | - | 0,48 | 0,21 | 0,027 | 0,418 (20°C) | 20 |
| 93/6539 | 64,94 | 12,63 | - | - | 0,51 | 0,20 | 0,022 | 0,379 (20°C) | 16 |
| 93/6760 | 65,30 | 12,03 | - | - | 0,51 | 0,20 | 0,047 | 0,426 (20°C) | 24 |
| 93/6761 | 65,17 | 12,55 | - | - | 0,53 | 0,20 | 0,041 | 0,381 (20°C) | 23 |
| 93/6762 | 65,25 | 13,09 | - | - | 0,52 | 0,20 | 0,043 | 0,326 (20°C) | 17 |
| 93/6763 | 65,01 | 12,58 | - | 1,99 | 0,53 | 0,22 | 0,045 | 0,354 (20°C) | 20 |
| 93/6764 | 62,82 | 12,56 | - | - | 0,52 | 0,20 | 0,054 | 0,417 (20°C) | 19 |
| 93/6765 | 67,11 | 12,48 | - | - | 0,51 | 0,21 | 0,051 | 0,343 (20°C) | 12 |
| 93/6766 | 69,71 | 11,56 | - | - | 0,51 | 0,21 | 0,047 | 0,359 (20°C) | 18 |
| 93/6767 | 75,02 | 11,06 | - | - | 0,52 | 0,21 | 0,044 | 0,243 (20°C) | 10 |
| 93/6839 | 60,18 | 12,47 | - | - | 0,53 | 0,22 | 0,043 | 0,462 (25°C) | 30 |
| 93/6840 | 65,20 | 11,03 | - | - | 0,51 | 0,22 | 0,043 | 0,500 (25°C) | 34 |
| 93/6841 | 65,23 | 11,51 | - | - | 0,51 | 0,22 | 0,043 | 0,462 (25°C) | 25 |
| 93/6842 | 65,08 | - | 11,90 | - | 0,47 | 0,15 | 0,036 | 0,612 (25°C) | 78 |
| 93/6843 | 65,12 | 8,94 | 2,92 | - | 0,53 | 0,21 | 0,037 | 0,470 (25°C) | 35 |
| 93/6844 | 65,10 | 5,95 | 5,92 | -- | 0,52 | 0,20 | 0,037 | 0,514 (25°C) | 49 |

Alle in der Tabelle 1 aufgelisteten Ausführungsbeispiele der vorliegenden Erfindung weisen eine hervorragende Temperaturbeständigkeit bzgl. der Sättigungsinduktion B_{S} und der Induktion B₁₀ im Bereich von -20°C und +80°C auf.

Die Curietemperaturen der meisten Legierungen lagen alle oberhalb 140°C. Die Koerzitivfeldstärken H_{C} lagen bei Raumtemperatur bei fast allen gezeigten Legierungsbeispielen unterhalb von 0,40 mA/cm.

In der Tabelle 2 sind die Sauerstoff- und Stickstoffgehalte verschiedener Ausführungsbeispiele im ungeglühten Zustand und nach Hochglühung unter einer Wasserstoffatmosphäre aufgeführt.

| Charge | Ni | Cr | Mn | Si | C | O-Gehalt ungeglüht | O-Gehalt geglüht | N-Gehalt ungeglüht | N-Gehalt geglüht |
|---|---|---|---|---|---|---|---|---|---|
| 93/6538 | 64,91 | 12,26 | 0,48 | 0,21 | 0,027 | 0,0067 | 0,0051 | 0,0008 | 0,0002 |
| | | | | | | | | | |
| 93/6760 | 65,30 | 12,03 | 0,51 | 0,20 | 0,047 | 0,0064 | 0,0038 | 0,0016 | 0,0001 |
| | | | | | | | | | |
| 93/6764 | 62,82 | 12,56 | 0,52 | 0,20 | 0,054 | 0,0040 | 0,0039 | 0,0012 | 0,0003 |
| | | | | | | | | | |
| 93/6766 | 69,71 | 11,56 | 0,51 | 0,21 | 0,047 | 0,0043 | 0,0072 | 0,0008 | 0,0002 |

Alle Legierungen zeichneten sich durch relativ hohe spezifische elektrische Widerstände ρ, die zumeist oberhalb 100 µΩ·cm lagen, so dass die Wirbelstromverluste beim Einsatz in Schrittmotoren gering gehalten werden können. Teilweise wurden Werte oberhalb 105 µΩ·cm erreicht. Das Korrosionsverhalten der Legierungen ist aufgrund der relativ hohen Nickel- und Chromund/oder Molybdängehalte sehr gut.

## Patentansprüche

1. Schrittmotor mit
- einem Rotor aus einem dauermagnetischen Material,
- einem Stator aus einer weichmagnetischen Legierung mit einer Sättigungsinduktion B_{S}, welche den Rotor umgibt und einer
- Spule mit einem Spulenkern aus einem weichmagnetischen Material zur impulsförmigen Magnetisierung des Stators,
**dadurch gekennzeichnet**,
a) daß die weichmagnetische Legierung im wesentlichen aus 60 < Ni < 80 Gew.%, 0,05 ≤ Mn ≤ 1,0 Gew.%, 8,5 ≤ (Cr + 0,85 Mo) ≤ 15 Gew.%, 0 ≤ Si ≤ 0,5 Gew.%, 0 ≤ Co ≤ 5,0 Gew.%, 0 ≤ B ≤ 0,3 Gew.%, Rest Fe sowie erschmelzungsbedingten und/oder zufälligen Verunreinigungen besteht und
b) daß die weichmagnetische Legierung bei einem angelegten Magnetfeld H = 10 A/cm eine Induktion 0,30 ≤ B₁₀ < 0,60 Tesla bei Raumtemperatur aufweist.

2. Schrittmotor nach Anspruch 1,
**dadurch gekennzeichnet,**
**daß** die weichmagnetische Legierung einen Gehalt an 60 < Ni ≤ 70 Gew.% und einen Gehalt an 8,5 ≤ (Cr + 0,85 Mo) ≤ 15 Gew.% aufweist und daß die weichmagnetische Legierung eine Induktion 0,30 ≤ B₁₀ ≤ 0,60 Tesla aufweist.

3. Schrittmotor nach Anspruch 1,
**dadurch gekennzeichnet,**
**daß** die weichmagnetische Legierung einen Gehalt an 10,0 ≤ (Cr + 0,85 Mo) ≤ 14,0 Gew.% aufweist und daß die weichmagnetische Legierung eine Induktion 0,35 ≤ B₁₀ ≤ 0,55 Tesla aufweist.

4. Schrittmotor nach Anspruch 3,
**dadurch gekennzeichnet,**
**daß** die weichmagnetische Legierung einen Gehalt an 60 < Ni ≤ 70 Gew.% und einen Gehalt an 10,5 ≤ (Cr + 0,85 Mo) ≤ 13,5 Gew.% aufweist und daß die weichmagnetische Legierung eine Induktion 0,40 ≤ B₁₀ ≤ 0,55 Tesla aufweist.

5. Schrittmotor nach Anspruch 4,
**dadurch gekennzeichnet,**
**daß** die weichmagnetische Legierung einen Gehalt an 63 ≤ Ni ≤ 67 Gew.% und einen Gehalt an 11,0 ≤ (Cr + 0,85 Mo) ≤ 13,0 Gew.% aufweist und daß die weichmagnetische Legierung eine Induktion 0,40 ≤ B₁₀ ≤ 0,52 Tesla aufweist.

6. Schrittmotor nach einem der Ansprüche 1 bis 5,
**dadurch gekennzeichnet,**
**daß** die weichmagnetische Legierung eine Curietemperatur T_{c} > 140°C, eine Koerzitivfeldstärke H_{c} < 40 mA/cm und einen spezifischen elektrischen Widerstand ρ > 100 µΩ·cm aufweist.

7. Schrittmotor nach Anspruch 6,
**dadurch gekennzeichnet,**
**daß** die weichmagnetische Legierung eine Curietemperatur T_{c} > 150°C, eine Koerzitivfeldstärke H_{c} < 35 mA/cm und einen spezifischen elektrischen Widerstand ρ > 105 µΩ·cm aufweist.

8. Schrittmotor nach einem der Ansprüche 1 bis 7,
**dadurch gekennzeichnet,**
**dass** der Gehalt an erschmelzungsbedingten und/oder zufälligen metallischen Verunreinigungen von Ti ≤ 0,01 Gew.% und Al ≤ 0,01 Gew.% beträgt.

9. Schrittmotor nach Anspruch 8,
**dadurch gekennzeichnet,**
**dass** der Gehalt an erschmelzungsbedingten und/oder zufälligen nichtmetallischen Verunreinigungen S ≤ 0,005 Gew.%, N ≤ 0,005 Gew.%, O ≤ 0,01 Gew.% und C ≤ 0,05 Gew.% beträgt.

10. Schrittmotor nach Anspruch 9,
**dadurch gekennzeichnet,**
**dass** der Gehalt an erschmelzungsbedingten und/oder zufälligen nichtmetallischen Verunreinigungen S ≤ 0,003 Gew.%, N ≤ 0,002 Gew.%, O ≤ 0,006 Gew.% und C ≤ 0,02 Gew.% beträgt.

11. Schrittmotor nach einem der Ansprüche 1 bis 10,
**dadurch gekennzeichnet,**
**dass** der Borgehalt 0,005 ≤ B ≤ 0,03 Gew.% beträgt.

12. Schrittmotor nach einem der Ansprüche 1 bis 11,
**dadurch gekennzeichnet,**
**dass** der Stator einstückig ausgebildet ist.

13. Schrittmotor nach einem der Ansprüche 1 bis 12,
**dadurch gekennzeichnet,**
**dass** der Spulenkern eine höhere Sättigungsinduktion B_{S} aufweist als der Stator.

14. Schrittmotor nach einem der Ansprüche 1 bis 13,
**dadurch gekennzeichnet,**
**dass** der Stator im Bereich der Öffnung zur Aufnahme des Rotors mit magnetisch sättigbaren Stegen versehen ist.

15. Schrittmotor nach einem der Ansprüche 1 bis 14,
**dadurch gekennzeichnet,**
**dass** der Spulenkern aus einer weichmagnetischen Legierung aus
| | |
|---|---|
| 44,0 ≤ Ni ≤ 49,0 Gew.%, | Mn ≤ 1,0 Gew.%, |
| Si ≤ 0,5 Gew.%, | Rest Eisen |
sowie erschmelzungsbedingten und/oder zufälligen Verunreinigungen besteht.

16. Weichmagnetische Legierung bestehend im wesentlichen aus 60 < Ni ≤ 80 Gew.%, 0,05 ≤ Mn ≤ 1,0 Gew.%, 8,5 ≤ (Cr + 0,85 Mo) ≤ 15 Gew.%, 0 ≤ Si ≤ 0,5 Gew.%, 0 ≤ Co ≤ 5,0 Gew.%, 0 ≤ B ≤ 0,3 Gew.% Rest Fe sowie aus erschmelzungsbedingten und/oder zufälligen Verunreinigungen besteht.

17. Weichmagnetische Legierung nach Anspruch 16,
**dadurch gekennzeichnet,**
**dass** die weichmagnetische Legierung einen Gehalt an 60 < Ni ≤ 70 Gew.% und einen Gehalt an 8,5 ≤ (Cr + 0,85 Mo) ≤ 15,0 Gew.% aufweist.

18. Weichmagnetische Legierung nach Anspruch 16,
**dadurch gekennzeichnet,**
**dass** die weichmagnetische Legierung einen Gehalt an 10,0 ≤ (Cr + 0,85 Mo) ≤ 14,0 Gew.% aufweist.

19. Weichmagnetische Legierung nach Anspruch 18,
**dadurch gekennzeichnet,**
**dass** die weichmagnetische Legierung einen Gehalt an 10,5 ≤ (Cr + 0,85 Mo) ≤ 13,5 Gew.%.

20. Weichmagnetische Legierung nach Anspruch 16,
**dadurch gekennzeichnet,**
**dass** die weichmagnetische Legierung einen Gehalt an 63 ≤ Ni ≤ 67 Gew.% und einen Gehalt an 11,0 ≤ (Cr + 0,85 Mo) ≤ 13,0 Gew.% aufweist.

21. Legierung nach einem der Ansprüche 16 bis 20,
**dadurch gekennzeichnet,**
**dass** der Gehalt an erschmelzungsbedingten und/oder zufälligen metallischen Verunreinigungen von Ti ≤ 0,01 und Al ≤ 0,01 beträgt.

22. Legierung nach einem der Ansprüche 16 bis 21,
**dadurch gekennzeichnet,**
**dass** der Gehalt an erschmelzungsbedingten und/oder zufälligen nichtmetallischen Verunreinigungen S ≤ 0,005 Gew.%, N ≤ 0,005 Gew.%, O ≤ 0,01 Gew.% und C ≤ 0,05 Gew.% beträgt.

23. Weichmagnetische Legierung nach Anspruch 22,
**dadurch gekennzeichnet,**
**dass** der Gehalt an erschmelzungsbedingten und/oder zu fälligen nichtmetallischen Verunreinigungen S ≤ 0,003 Gew.%, N ≤ 0,002 Gew.%, O ≤ 0,006 Gew.%, C ≤ 0,02 Gew.% beträgt.

24. Analoge elektrische Quarzuhr mit einem Schrittmotor nach einem der Ansprüche 1 bis 14.
